# EUROPÄISCHE PATENTSCHRIFT

(11) **EP 3 440 534 B1**
(45) Veröffentlichungstag und Bekanntmachung des Hinweises auf die Patenterteilung: **29.04.2020**
(21) Anmeldenummer: 17711139.0
(22) Anmeldetag: 15.03.2017
(51) Int. Cl.: G06F 3/01

(54) **FELDGERÄT DER MESS- UND AUTOMATISIERUNGSTECHNIK**
METROLOGY AND AUTOMATION FIELD DEVICE
APPAREIL DE TERRAIN POUR TECHNIQUE DE MESURE ET D'AUTOMATISATION

(30) Priorität: 05.04.2016 DE 102016106179
(43) Veröffentlichungstag der Anmeldung: 13.02.2019
(73) Patentinhaber: Endress+Hauser Flowtec AG, 4153 Reinach (CH)
(72) Erfinder: WEISS, Steffen, 79639 Grenzach-Wyhlen (DE); TSCHUDIN, Beat, 4153 Reinach (CH); WORRETH, Bruno, 68480 Kiffis (FR); BIER, Thomas, 4125 Riehen (CH); MATT, Christian, 4153 Reinach (DE)
(74) Vertreter: Andres, Angelika Maria
(86) Internationale Anmeldenummer: PCT/EP2017/056066
(87) Internationale Veröffentlichungsnummer: WO 2017/174308

(56) Entgegenhaltungen:
- EP-A1- 2 458 831
- EP-A1- 2 999 275
- DE-A1-102011 084 789
- DE-A1-102013 107 606

## Beschreibung

Die Erfindung betrifft ein Feldgerät der Mess- und Automatisierungstechnik, welches ein Funkmodul aufweist.

Feldgeräte werden im Bereich der Mess- und Automatisierungstechnik eingesetzt, um Messgrößen verschiedener Art aufzunehmen. Beispielsweise werden Feldgeräte dazu eingesetzt, den Volumendurchfluss von Medien in einer Rohrleitung oder den Füllstand eines Mediums in einem Behältnis zu messen.

Viele solcher Feldgeräte weisen eine Bedienvorrichtung mit Tastatur und Display auf, um über diese Bedienvorrichtung Einstellungen des Feldgeräts vornehmen zu können oder aktuelle Messgrößen abrufen zu können. Häufig ist eine komplexe Bedienvorrichtung mit Tastatur aber nicht erwünscht, beispielsweise weil eine Tastatur mit mehreren Tasten fehleranfällig ist. So lehrt die Offenbarungsschrift DE102013107606A1 eine photovoltaische Anlagenkomponente mit einem Display und mit mindestens einem Beschleunigungssensor zur zeitaufgelösten Erfassung von Beschleunigungsprofilen. Beschleunigungen der Anlagenkomponente, welche beispielsweise durch Klopfen erzeugt werden und zu einem Beschleunigungsprofil passen, werden zum Bedienen der Anlagenkomponente benutzt, wobei der Beschleunigungssensor den Ort der Erzeugung der Beschleunigung erfassen kann. Das kann dazu genutzt werden, die Anlagenkomponente durch Klopfen auf verschiedene Bereiche des Displays zu steuern.

Die DE102011084789A1 beschreibt eine Anordnung umfassend ein Feldgerät der Prozessautomatisierungstechnik sowie ein von dem Feldgerät losgelöstes Bediengerät zum Bedienen des Feldgerätes.
Die EP2999275A1 beschreibt ein mobiles elektronisches Gerät mit einem Beschleunigungssensor, wobei ein Controller dazu eingerichtet ist, bei Bewegungsstopp eine Kommunikationsfunktion einzuschalten.
EP2458831A1 beschreibt ein Kommunikationssystem und ein Kommunikationsgerät, wobei ein Controller dazu eingerichtet ist, einen Bewegungszustand sowie eine Bewegungsrichtung zu erkennen.

Je nach Einsatzbereich besteht kein Interesse an einer umfassenden Steuerung des Feldgeräts durch eine direkte mechanische Interaktion mit dem Feldgerät selbst, da das Feldgerät eine Funkschnittstelle zu einer entfernten Steuerungseinheit aufweist. Eine solche Funkschnittstelle wird aber nur im Falle eines umfassenden Steuerungswunsches benötigt, bei Nichtverwendung der Schnittstelle entsteht ein Sicherheitsrisiko hinsichtlich ungewollter Bedienung, zusätzlich weist ein Feldgerät mit Funkschnittstelle einen erhöhten Energiebedarf auf. Die Aufgabe der Erfindung ist es daher, ein Feldgerät vorzuschlagen, welches eine erhöhte Sicherheit hinsichtlich ungewollter Bedienung und einen geringeren Energiebedarf aufweist. Die Aufgabe wird erfindungsgemäß gelöst durch ein Feldgerät gemäß dem unabhängigen Anspruch 1.

Das erfindungsgemäße Feldgerät der Mess- und Automatisierungstechnik umfasst dabei folgende Elemente:
Ein Gehäuse mit einem Gehäusekörper, welcher Gehäusekörper mindestens eine Gehäusekammer mit mindestens einer Gehäusewand aufweist, wobei die mindestens eine Gehäusewand die Gehäusekammer umgibt;
ein Messwandler zum Erfassen von mindestens einer Messgröße;
eine Betriebselektronik zum Betreiben des Messwandlers und zum Bereitstellen eines von der Messgröße abhängigen Signals, wobei die Betriebselektronik in der Gehäusekammer angeordnet ist, und wobei die Betriebselektronik mit dem Messwandler elektronisch gekoppelt ist;
ein Funkmodul zur Übertragung von Informationen, welches mit der Betriebselektronik elektronisch gekoppelt ist, wobei das Funkmodul in der Gehäusekammer angeordnet ist;
wobei das Feldgerät weiterhin mindestens einen Beschleunigungssensor aufweist, welcher in der Gehäusekammer angeordnet ist, und durch welchen Beschleunigungssensor ein Beschleunigen des Gehäusekörpers erfassbar ist, und wobei die Betriebselektronik mit dem Beschleunigungssensor elektronisch gekoppelt ist und dazu eingerichtet ist, mindestens eine Folge von Beschleunigungen als Eingabesignalfolge zur Steuerung der Betriebselektronik zu interpretieren,
wobei das Funkmodul das Funkmodul durch eine erste Eingabesignalfolge einschaltbar und durch eine zweite Eingabesignalfolge ausschaltbar ist,
wobei das Feldgerät weiterhin eine Anzeigeeinheit umfasst, wobei die Anzeigeeinheit in die Gehäusewand eingelassen ist, welche Anzeigeeinheit mit der Betriebselektronik elektronisch gekoppelt ist und welche Anzeigeeinheit in einem ersten Modus einen ersten Satz Parameter anzeigt,
wobei die Anzeigeeinheit zur Anzeige von mindestens einem zweiten Satz Parameter durch eine dritte Eingabesignalfolge veranlassbar ist.

In einer vorteilhaften Ausgestaltung des Feldgeräts ist das Funkmodul ein Bluetooth-Funkmodul.

In einer vorteilhaften Ausgestaltung des Feldgeräts weist die Anzeigeeinheit ein Display oder ein LED-Element auf.
In einer vorteilhaften Ausgestaltung des Feldgeräts ist die Betriebselektronik dazu eingerichtet, mindestens einen durch den Beschleunigungssensor gemessenen Beschleunigungswert durch die Betriebselektronik zu analysieren und ein Überschreiten des Beschleunigungsgrenzwerts als Eingabesignal zu erfassen.
In einer vorteilhaften Ausgestaltung des Feldgeräts ist der Beschleunigungssensor dazu eingerichtet, ein Überschreiten mindestens eines Beschleunigungsgrenzwerts als Eingabesignal zu erfassen, wobei ein vom Beschleunigungssensor erfasstes Eingabesignal und/oder erfasste Eingabesignalfolge durch die Betriebselektronik erfassbar ist.

In einer vorteilhaften Ausgestaltung des Feldgeräts sind der Beschleunigungssensor und/oder die Betriebselektronik dazu eingerichtet, die Beschleunigungswerte von einer, zwei, oder drei Raumachsen eines Eingabesignals und/oder einer Eingabesignalfolge zu berücksichtigen.

In einer vorteilhaften Ausgestaltung des Feldgeräts sind der Beschleunigungssensor und/oder die Betriebselektronik dazu eingerichtet, zur Analyse der Beschleunigungswerte ermittelte Schwingungsfrequenzen zu berücksichtigen.

In einer vorteilhaften Ausgestaltung des Feldgeräts basiert die Erkennung der Eingabesignalfolge auf Analyse der zeitlichen Abstände und/oder der Amplituden und/oder der Anzahl der Eingabesignale der Eingabesignalfolge.

In einer vorteilhaften Ausgestaltung des Feldgeräts sind die erste Eingabesignalfolge und die zweite Eingabesignalfolge gleich.

In einer vorteilhaften Ausführung des Feldgeräts sind zwei Eingabesignalfolgen durch Zeitintervall von mindestens 3 Sekunden und insbesondere mindestens 5 Sekunden getrennt.

In einer vorteilhaften Ausgestaltung des Feldgeräts ist der Messwandler in der Gehäusekammer angeordnet.

In einer vorteilhaften Ausgestaltung des Feldgeräts ist die Messgröße mindestens eine Größe aus folgender Liste:
Volumendurchfluss, Massedurchfluss, Dichte, Viskosität, Temperatur, Druck, Füllstand, pH-Wert, elektrische Leitfähigkeit, elektrischer Strom, elektrische Spannung, Kapazität, Induktivität, Transmission und/oder Absorption von elektromagnetischer Strahlung, Transmission und/oder Absorption von Schallsignalen.

Es wird also durch die vorliegende Erfindung ein Feldgerät mit einem per Berühren oder Klopfen ein- und ausschaltbarem Funkmodul vorgeschlagen Im Folgenden wird die Erfindung anhand von einer in Zeichnungen schematisch dargestellten Ausführungsform näher erläutert.

Es zeigt:
Fig. 1: Eine Aufsicht auf ein von oben geöffnetes Gehäuse;
Fig. 2: Eine Seitenansicht auf das Gehäuse.

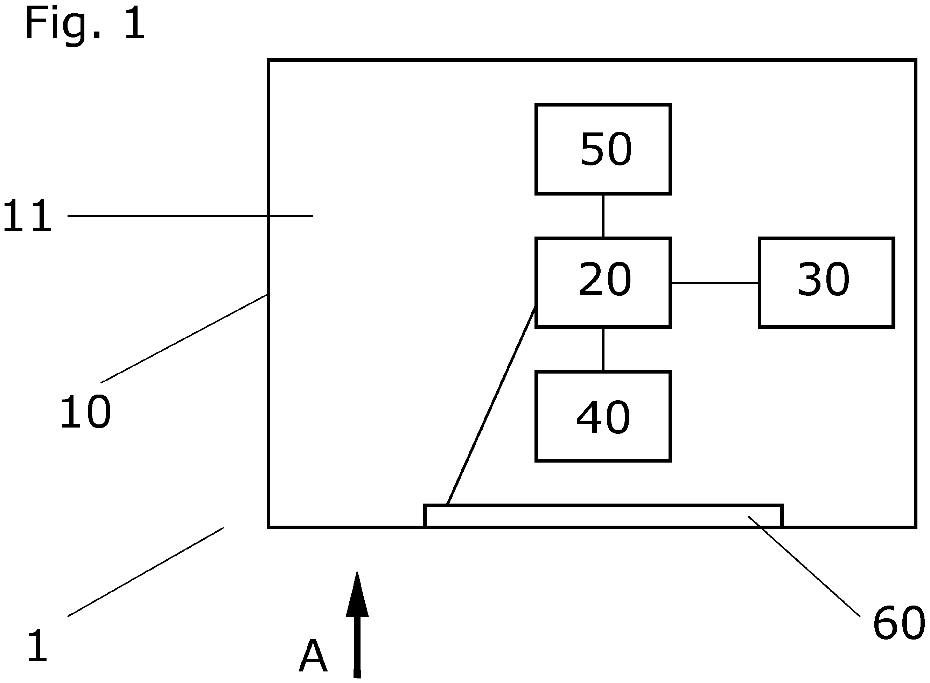

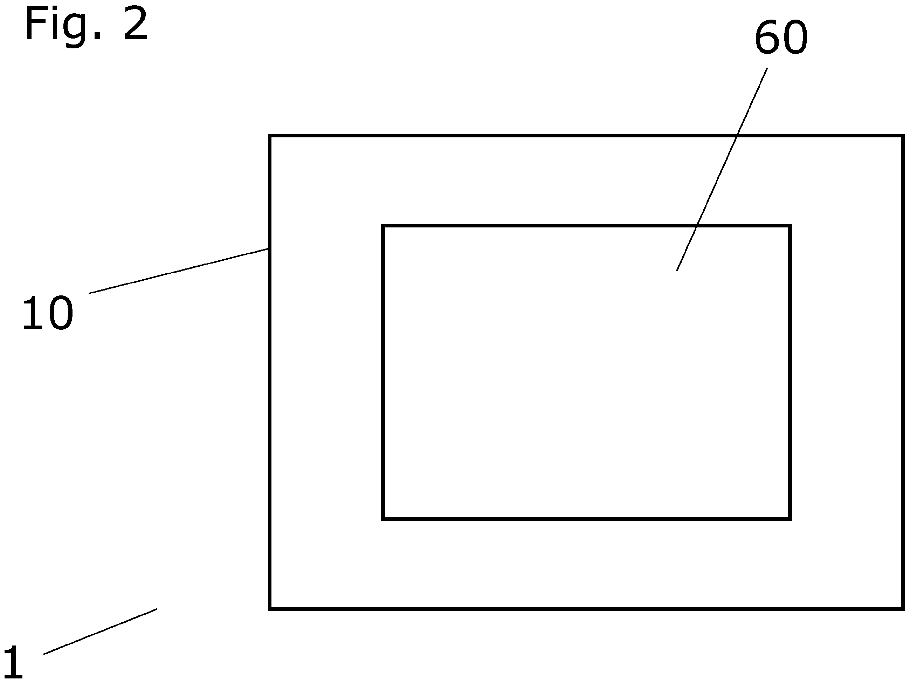

Fig. 1 zeigt eine Aufsicht auf ein von oben geöffnetes Gehäuse eines erfindungsgemäßen Feldgeräts 1 mit einer Gehäusewand 10 und einer Gehäusekammer 11, in welcher Gehäusekammer 11 eine Betriebselektronik 20, ein Funkmodul 30, ein Beschleunigungssensor 40 und ein Messwandler 50 angeordnet ist, wobei in die Gehäusewand 10 eine Anzeigeeinheit eingelassen ist. Eine in Fig. 2 gezeigte Seite der Gehäusewand 10 ist durch den Buchstaben A gekennzeichnet. Der Beschleunigungssensor 40 kann dabei mechanisch mit der Anzeigeeinheit 60 gekoppelt sein. Der Messwandler kann beispielsweise dazu eingerichtet sein, mindestens eine Messgröße aus der folgenden Liste zu erfassen: Volumendurchfluss, Massedurchfluss, Dichte, Viskosität, Temperatur, Druck, Füllstand, pH-Wert, elektrische Leitfähigkeit, elektrischer Strom, elektrische Spannung, Kapazität, Induktivität, Transmission und/oder Absorption von elektromagnetischer Strahlung, Transmission und/oder Absorption von Schallsignalen.
Durch Berühren oder Anklopfen des Gehäuses des Feldgeräts 1 mit einer ersten Eingabesignalfolge kann das Funkmodul 30, welches beispielsweise ein Bluetooth-Funkmodul ist, angeschaltet werden. Durch eine zweite Eingabesignalfolge kann das Funkmodul 30 ausgeschaltet werden. Durch das Funkmodul 30 wird ein Zugang zur Betriebselektronik 20 des Feldgeräts 1 bereitgestellt, welcher Zugang das Austauschen von Information zwischen der Betriebselektronik 20 und einem Anwender ermöglicht. Das Austauschen von Information kann dabei beispielsweise einem Abrufen von Messdaten oder einem Steuern beziehungsweise Bedienen des Feldgeräts 1 durch einen Anwender dienen.
Eine durch Berühren oder Anklopfen übermittelte mechanische Eingabesignalfolge, wobei eine Eingabesignalfolge eine Serie von Eingabesignalen aufweist, wird von einem Beschleunigungssensor 40 in eine elektrische Signalfolge gewandelt. Die Erkennung einer Eingabesignalfolge geschieht durch den Beschleunigungssensor 40 oder durch die mit dem Beschleunigungssensor 40 elektronisch gekoppelte Betriebsschaltung 20.
In einer vorteilhaften Ausführungsform kann, um ein Signal von allgegenwärtigem Rauschen zu trennen, beispielsweise eine durch Berühren oder Anklopfen zu erreichende Beschleunigungsuntergrenze festgelegt sein.
Je nach Verfügbarkeit von Rechenleistung auf Seiten des Feldgeräts kann auch eine fortgeschrittene Signalanalyse angewandt werden, wobei beispielsweise eine Frequenzanalyse auf Basis der Fouriertransformation eines Eingangssignals der Eingangssignalfolge oder der gesamten Eingangssignalfolge durchgeführt wird. Eine Frequenzanalyse kann hilfreich sein, um angeregte Eigenfrequenzen des Gehäuses des Feldgeräts 1 und Rauschen zu erkennen und von typischen Frequenzen von Eingabesignalen oder Eingabesignalfolgen zu trennen. In einer vorteilhaften Ausführungsform kann zur Signalanalyse anstatt einer Frequenzanalyse auf Basis der Fouriertransformation auch das Konzept "Diskrete Wavelet Analyse" angewandt werden. Hierbei wird ein Wavelet, dessen Form dem zeitlichen Verlauf eines typischen Eingabesignals ähnlich ist, mit dem durch den Beschleunigungssensor 40 registrierten Signal gefaltet. Ein Maximum des Faltungsergebnisses entsteht durch hohe Übereinstimmung des Wavelets mit dem durch den Beschleunigungssensor 40 registrierten Signal. Der Beitrag von Rauschen oder von angeregten Eigenfrequenzen des Gehäuses zum durch den Beschleunigungssensor 40 registrierten Signal kann dabei wirkungsvoll ausgeblendet werden, da die Faltung einer beliebigen Funktion mit einem Wavelet Bandpasscharakter aufweist. Diese Vorgehensweise kann unter Umständen mit einem geringeren Bedarf an Rechenleistung einhergehen.

Im Fall, dass der Beschleunigungssensor 40 Beschleunigungswerte von zwei oder drei Raumachsen getrennt berücksichtigt, kann zusätzlich ein räumliches Beschleunigungsprofil des Feldgeräts 1 erstellt werden. Durch Abgleich mit Sollprofilen kann die Erkennung von Eingabesignalen und Eingabesignalfolgen verbessert werden.
Sollprofile und/oder die Form des mindestens einen Wavelets können dabei in der Betriebselektronik 20 hinterlegt sein.
Die Erkennung einer Eingabesignalfolge basiert auf Analyse der zeitlichen Abstände und/oder der Amplituden und/oder der Anzahl der Eingabesignale der Eingabesignalfolge. Bevorzugt umfasst eine Eingabesignalfolge dabei mindestens zwei Eingabesignale, wobei der zeitliche Abstand zwischen benachbarten Eingabesignalen höchstens 5 Sekunden und insbesondere höchstens 3 Sekunden ist. Dadurch ist eine Abgrenzung von zufälligen, einzelnen Stößen sichergestellt. Beispielsweise kann eine Eingabesignalfolge auch mehrere Teilfolgen umfassen. Die erste Eingabesignalfolge und die zweite Eingabesignalfolge können beispielsweise gleich sein. Dadurch erniedrigt sich der Speicherbedarf der Betriebselektronik des Feldgeräts.

Fig. 2 zeigt eine Seitenansicht auf die in Fig. 1 mit A gekennzeichnete Seite des Gehäuses des Feldgeräts 1 mit der Gehäusewand 10 und der in die Gehäusewand 10 eingelassenen Anzeigeeinheit 60, welche mit der Betriebselektronik elektronisch gekoppelt ist. Die Anzeigeeinheit 60 ist dazu eingerichtet, in einem ersten Modus einen ersten Satz Parameter anzuzeigen. Der erste Satz Parameter kann beispielsweise zumindest eine aktuell gemessene Messgröße oder einen Energieverbrauch oder eine Datenübertragungsrate umfassen. Durch eine dritte Eingabesignalfolge kann die Anzeigeeinheit 60 dazu veranlasst werden, einen zweiten Satz Parameter auszugeben. Der zweite Satz Parameter kann beispielsweise zumindest eine in eine andere Einheit umgerechnete aktuelle Messgröße oder den zeitlichen Verlauf zumindest einer Messgröße über ein vorbestimmtes Zeitintervall oder den Mittelwert zumindest einer Messgröße über ein vorbestimmtes Zeitintervall umfassen. Der zweite Satz an Parametern kann auch eine Liste von mehreren Geräteparametern umfassen. Das Wechseln der Anzeigeeinheit vom zweiten Modus in den ersten Modus kann dabei nach Ablauf einer Zeit automatisiert oder durch eine vierte Eingabesignalfolge erfolgen, wobei die vierte Eingabesignalfolge gleich der dritten Eingabesignalfolge sein kann. In einer weiteren Ausführungsform kann die Anzeigeeinheit auch mindestens einem dritten Modus betrieben werden, wobei der dritte Modus dazu eingerichtet sind, die Anzeigeeinheit jeweils einen dritten Parametersatz anzeigen zu lassen.
Das erfindungsgemäße Feldgerät weist also mindestens einen Beschleunigungssensor auf, mit welchem durch mechanische Wechselwirkung ein Funkmodul 30 an- und ausgeschaltet werden kann.

### Bezugszeichen

- 1: Feldgerät
- 10: Gehäusewand
- 11: Gehäusekammer
- 20: Betriebselektronik
- 30: Funkmodul
- 40: Beschleunigungssensor
- 50: Messwandler
- 60: Anzeigeeinheit
- A: Die in Fig. 2 gezeigte Seite

## Patentansprüche

1. Feldgerät der Mess- und Automatisierungstechnik, umfassend:
Ein Gehäuse mit einem Gehäusekörper, welcher Gehäusekörper mindestens eine Gehäusekammer (11) mit mindestens einer Gehäusewand (10) aufweist, wobei die mindestens eine Gehäusewand (10) die Gehäusekammer (11) umgibt;
ein Messwandler (50) zum Erfassen von mindestens einer Messgröße;
eine Betriebselektronik (20) zum Betreiben des Messwandlers (50) und zum Bereitstellen eines von der Messgröße abhängigen Signals, wobei die Betriebselektronik (20) in der Gehäusekammer (11) angeordnet ist, und wobei die Betriebselektronik (20) mit dem Messwandler (50) elektronisch gekoppelt ist;
ein Funkmodul (30) zur Übertragung von Informationen, welches mit der Betriebselektronik elektronisch gekoppelt ist, wobei das Funkmodul (30) in der Gehäusekammer angeordnet ist;
wobei das Feldgerät (1) weiterhin mindestens einen Beschleunigungssensor (40) aufweist, welcher in der Gehäusekammer (11) angeordnet ist, und durch welchen Beschleunigungssensor (40) ein Beschleunigen des Gehäusekörpers erfassbar ist, und wobei die Betriebselektronik (20) mit dem Beschleunigungssensor (40) elektronisch gekoppelt ist und dazu eingerichtet ist, mindestens eine Folge von Beschleunigungen als Eingabesignalfolge zur Steuerung der Betriebselektronik (20) zu interpretieren,
**dadurch gekennzeichnet, dass**
das Funkmodul (30) durch eine erste Eingabesignalfolge einschaltbar und durch eine zweite Eingabesignalfolge ausschaltbar ist,
wobei das Feldgerät weiterhin umfasst: eine Anzeigeeinheit (60),
wobei die Anzeigeeinheit (60) in die Gehäusewand (11) eingelassen ist, welche Anzeigeeinheit (60) mit der Betriebselektronik (20) elektronisch gekoppelt ist und welche Anzeigeeinheit (60) in einem ersten Modus einen ersten Satz Parameter anzeigt,
wobei die Anzeigeeinheit (60) durch die Betriebselektronik (20) zur Anzeige von mindestens einem zweiten Satz Parameter durch eine dritte Eingabesignalfolge veranlassbar ist.

2. Feldgerät nach Anspruch 1,
wobei das Funkmodul (30) ein Bluetooth-Funkmodul ist.

3. Feldgerät nach einem der vorhergehenden Ansprüche,
wobei die Anzeigeeinheit (60) ein Display oder ein LED-Element aufweist.

4. Feldgerät nach Anspruch 3,
wobei die Betriebselektronik (20) dazu eingerichtet ist, mindestens einen durch den Beschleunigungssensor (40) gemessenen Beschleunigungswert durch die Betriebselektronik (20) zu analysieren und ein Überschreiten des Beschleunigungsgrenzwerts als Eingabesignal zu erfassen.

5. Feldgerät nach Anspruch 4,
wobei ein Überschreiten mindestens eines Beschleunigungsgrenzwerts durch den Beschleunigungssensor (40) als Eingabesignal erfasst wird, und wobei ein vom Beschleunigungssensor (40) erfasstes Eingabesignal und/oder erfasste Eingabesignalfolge durch die Betriebselektronik (20) erfasst wird.

6. Feldgerät nach-einem der vorigen Ansprüche 4 oder 5,
wobei der Beschleunigungssensor und/oder die Betriebselektronik dazu eingerichtet sind, zur Erfassung eines Eingabesignals und/oder einer Eingabesignalfolge des mindestens einen Beschleunigungswerts bezüglich einer, zwei, oder drei Raumachsen zu berücksichtigen.

7. Feldgerät nach einem der vorigen Ansprüche,
wobei der Beschleunigungssensor und/oder die Betriebselektronik dazu eingerichtet sind, zur Analyse des mindestens einen Beschleunigungswerts ermittelte Schwingungsfrequenzen, insbesondere Schwingungsfrequenzen des Gehäuses zu berücksichtigen.

8. Feldgerät nach einem der vorigen Ansprüche,
wobei die Erkennung der Eingabesignalfolge auf Analyse der zeitlichen Abstände und/oder der Amplituden und/oder der Anzahl der Eingabesignale der Eingabesignalfolge basiert.

9. Feldgerät nach einem der vorigen Ansprüche,
wobei die erste Eingabesignalfolge und die zweite Eingabesignalfolge gleich sind.

10. Feldgerät nach einem der vorigen Ansprüche,
wobei zwei Eingabesignalfolgen durch ein Zeitintervall von mindestens 3 Sekunden und insbesondere mindestens 5 Sekunden getrennt sind.

11. Feldgerät nach einem der vorigen Ansprüche,
wobei der Messwandler (50) in der Gehäusekammer (11) angeordnet ist.

12. Feldgerät nach einem der vorigen Ansprüche,
wobei die Messgröße mindestens eine Größe aus folgender Liste ist: Volumendurchfluss, Massedurchfluss, Dichte, Viskosität, Temperatur, Druck, Füllstand, pH-Wert, elektrische Leitfähigkeit, elektrischer Strom, elektrische Spannung, Kapazität, Induktivität, Transmission und/oder Absorption von elektromagnetischer Strahlung, Transmission und/oder Absorption von Schallsignalen.

## Claims

1. Field device used in measuring and automation technology, comprising:
a housing with a housing body, said housing body having at least a housing chamber (11) with at least a housing wall (10), wherein the at least one housing wall (10) surrounds the housing chamber (11);
a transducer (50) designed to measure at least one measured variable;
an operating electronics unit (20) for operating the transducer (50) and for providing a signal that is dependent on the measured variable, wherein the operating electronics unit (20) is arranged in the housing chamber (11), and wherein the operating electronics unit (20) is coupled electronically with the transducer (50); a radio module (30) for the transmission of information, said radio module being coupled electronically with the operating electronics unit, wherein said radio module (30) is arranged in the housing chamber;
wherein the field device (1) further comprises at least one acceleration sensor (40), which is arranged in the housing chamber (11), and wherein an acceleration of the housing body can be measured by said acceleration sensor (40), and wherein the operating electronics unit (20) is coupled electronically with the acceleration sensor (40) and designed to interpret at least one sequence of accelerations as an input signal sequence to control the operating electronics unit (20),
**characterized**
**in that** the radio module (30) can be switched on by a first input signal sequence and can be switched off by a second input signal sequence,
wherein the field device further comprises: a display unit (60),
wherein the display unit (60) is embedded in the housing wall (11), said display unit being coupled electronically with the operating electronics unit (20) and wherein said display unit (60) displays a first set of parameters in a first mode, wherein the display unit (60) can be commanded by the operating electronics unit (20) to display at least a second parameter set via a third input signal sequence.

2. Field device as claimed in Claim 1,
wherein the radio module (30) is a Bluetooth radio module.

3. Field device as claimed in one of the previous claims,
wherein the display unit (60) comprises a display or an LED element.

4. Field device as claimed in Claim 3,
wherein the operating electronics unit (20) is designed to analyze at least one acceleration value recorded by the acceleration sensor (40) and to detect an overshooting of the acceleration limit value as the input signal.

5. Field device as claimed in Claim 4,
wherein an overshooting of at least one acceleration limit value is recorded by the acceleration sensor (40) as an input signal, and wherein an input signal and/or an input signal sequence recorded by the acceleration sensor (40) is recorded by the operating electronics unit (20).

6. Field device as claimed in one of the previous claims 4 or 5,
wherein - for the purpose of recording an input signal and/or an input signal sequence - the acceleration sensor and/or the operating electronics unit is/are designed to take into account at least one acceleration value in relation to one, two or three principal axes.

7. Field device as claimed in one of the previous claims,
wherein - for the purpose of analyzing the at least one acceleration value - the acceleration sensor and/or the operating electronics unit is/are designed to take into consideration vibration frequencies that have been determined, particularly vibration frequencies of the housing.

8. Field device as claimed in one of the previous claims,
wherein the identification of the input signal sequence is based on the analysis of the time intervals and/or the amplitudes and/or the number of input signals of the input signal sequence.

9. Field device as claimed in one of the previous claims,
wherein the first input signal sequence and the second input signal sequence are identical.

10. Field device as claimed in one of the previous claims,
wherein the two input signal sequences are separated by a time interval of at least 3 seconds and particularly of at least 5 seconds.

11. Field device as claimed in one of the previous claims,
wherein the transducer (50) is arranged in the housing chamber (11).

12. Field device as claimed in one of the previous claims,
wherein the measured variable is at least a variable from the following list:
volume flow, mass flow, density, viscosity, temperature, pressure, level, pH value, electrical conductivity, electrical current, electrical voltage, capacitance, inductance, transmission and/or absorption of electromagnetic radiation, transmission and/or absorption of sound signals.

## Revendications

1. Appareil de terrain de la technique de mesure et d'automatisation, comprenant :
un boîtier avec un corps de boîtier, lequel corps de boîtier comprend au moins un compartiment de boîtier (11) avec au moins une paroi de boîtier (10), l'au moins une paroi de boîtier (10) entourant le compartiment de boîtier (11) ;
un transducteur (50) destiné à la mesure d'au moins une grandeur de mesure ; une électronique d'exploitation (20) destinée à l'exploitation du transducteur (50) et à la mise à disposition d'un signal dépendant de la grandeur de mesure,
l'électronique d'exploitation (20) étant disposée dans le compartiment de boîtier (11), et l'électronique d'exploitation (20) étant couplée électroniquement avec le transducteur (50) ; un module radio (30) destiné à la transmission d'informations, lequel module radio est couplé électroniquement avec l'électronique d'exploitation et lequel module radio (30) est disposé dans le compartiment de boîtier ;
l'appareil de terrain (1) comprenant en outre un capteur d'accélération (40), lequel est disposé dans le compartiment de boîtier (11), et capteur d'accélération (40) à travers lequel une accélération du corps de boîtier peut être mesurée, et
l'électronique d'exploitation (20) étant couplée électroniquement avec le capteur d'accélération (40) et conçue de telle sorte à interpréter une séquence d'accélérations en tant que séquence de signal d'entrée en vue de la commande de l'électronique d'exploitation (20),
**caractérisé**
**en ce que** le module radio (30) peut être activé par une première séquence de signal d'entrée et désactivé par une deuxième séquence de signal d'entrée, l'appareil de terrain comprenant en outre : une unité d'affichage (60),
l'unité d'affichage (60) étant couplée électroniquement avec l'électronique d'exploitation (20) et laquelle unité d'affichage (60) affiche dans un premier mode un premier jeu de paramètres,
l'unité d'affichage (60) pouvant être commandée par l'électronique d'exploitation (20) pour l'affichage d'au moins un deuxième jeu de paramètres par le biais d'une troisième séquence de signal d'entrée.

2. Appareil de terrain selon la revendication 1,
pour lequel le module radio (30) est un module radio Bluetooth.

3. Appareil de terrain selon l'une des revendications précédentes,
pour lequel l'unité d'affichage (60) comprend un afficheur ou un élément à LED.

4. Appareil de terrain selon la revendication 3,
pour lequel l'électronique d'exploitation (20) est conçue de telle sorte à analyser au moins une valeur d'accélération mesurée par le capteur d'accélération (40) et à détecter un dépassement de la valeur limite d'accélération en tant que signal d'entrée.

5. Appareil de terrain selon la revendication 4,
pour lequel un dépassement d'au moins une valeur limite d'accélération est détecté en tant que signal d'entrée par le capteur d'accélération (40), et pour lequel un signal d'entrée mesuré par le capteur d'accélération (40) et/ou une séquence de signal d'entrée est mesurée par l'électronique d'exploitation (20).

6. Appareil de terrain selon l'une des revendications précédentes 4 ou 5,
pour lequel le capteur d'accélération et/ou l'électronique d'exploitation sont conçus de telle sorte à tenir compte, pour la mesure d'un signal d'entrée et/ou d'une séquence de signal d'entrée, de l'au moins une valeur d'accélération par rapport à un, deux ou trois axes cartésiens.

7. Appareil de terrain selon l'une des revendications précédentes,
pour lequel le capteur d'accélération et/ou l'électronique d'exploitation sont conçus de telle sorte à tenir compte, pour l'analyse de l'au moins une valeur d'accélération, des fréquences de vibration déterminées, notamment des fréquences de vibration du boîtier.

8. Appareil de terrain selon l'une des revendications précédentes,
pour lequel l'identification de la séquence de signal d'entrée est basée sur l'analyse des intervalles de temps et/ou des amplitudes et/ou du nombre de signaux d'entrée de la séquence de signal d'entrée.

9. Appareil de terrain selon l'une des revendications précédentes,
pour lequel la première séquence de signal d'entrée et la deuxième séquence de signal d'entrée sont identiques.

10. Appareil de terrain selon l'une des revendications précédentes,
pour lequel les deux séquences de signal d'entrée sont séparées par un intervalle de temps d'au moins 3 secondes et notamment d'au moins 5 secondes.

11. Appareil de terrain selon l'une des revendications précédentes,
pour lequel le transducteur (50) est disposé dans le compartiment de boîtier (11).

12. Appareil de terrain selon l'une des revendications précédentes,
pour lequel la grandeur de mesure est au moins une grandeur contenue dans la liste suivante :
Débit volumique, débit massique, densité, viscosité, température, pression, niveau, pH, conductivité électrique, courant électrique, tension électrique, capacité, inductance, émission et/ou absorption d'un rayonnement électromagnétique, émission et/ou absorption de signaux sonores.
